# EUROPÄISCHE PATENTANMELDUNG

(11) **EP 1 699 129 A1**
(43) Veröffentlichungstag der Anmeldung: **06.09.2006**
(21) Anmeldenummer: 05405221.2
(22) Anmeldetag: 04.03.2005
(51) Int. Cl.: H02M 7/5387, H02M 1/12

(54) **Umrichtersystem**

(71) Anmelder: ABB RESEARCH LTD., 8050 Zürich (CH)
(72) Erfinder: Häderli, Christoph, 8047 Zürich (CH)
(74) Vertreter: ABB Patent Attorneys

(57) **Zusammenfassung**

Das erfindungsgemässe Umrichtersystem (1), umfasst einen Umrichter (2) und eine Phasenanschlussleitung (4), welche mit dem Umrichter (2) verbunden ist und Phasenanschlüsse (41) zum Anschluss einer elektrischen Last (3) aufweist. An die Phasenanschlüsse (41) ist eine Hilfsleitung (5) angeschlossen, und die Wellenimpedanz der Hilfsleitung (5) entspricht im wesentlichen der Wellenimpedanz der Phasenanschlussleitung (4).

Alternativ kann im Falle einer angeschlossenen Last (3) an die Phasenanschlüsse (41) eine Hilfsleitung (5) angeschlossen sein. Der Kehrwert der Wellenimpedanz der Phasenanschlussleitung entspricht (4) im wesentlichen der Summe des Kehrwertes der Wellenimpedanz der Hilfsleitung (5) und des Kehrwertes der Lasteingangsimpedanz.

## Beschreibung

### Technisches Gebiet

Die Erfindung bezieht sich auf das Gebiet der Leistungselektronik. Sie geht von einem Umrichtersystem gemäss den Oberbegriffen der unabhängigen Ansprüche aus.

### Stand der Technik

Umrichter können als Spannungsquelle für Motoren betrieben werden. Am Ausgang der Umrichter werden Spannungswellen erzeugt, welche sich über eine Phasenanschlussleitung, die den Umrichter mit dem Motor elektrisch verbindet und am Motoreingang Phasenanschlüsse aufweist, in Richtung vom Motoreingang ausbreiten. Dort werden die Wellen im Falle von schnellen und steilen Spannungsänderungen bei fehlender Übereinstimmung der Wellenimpedanzen der Phasenanschlussleitung und der Motoreingangsimpedanz reflektiert. Dadurch wird eine Überspannung erzeugt, welche von der Länge und den Welleneigenschaften der Phasenanschlussleitung sowie von den Schaltfrequenzen im Umrichter und dadurch erzeugten Spannungsänderungen abhängt. Bei hohen Schaltfrequenzen, wie sie beispielsweise von Umrichtern, welche mit schnell schaltenden Halbleitern wie IGBTs ("Insulated Gate Bipolar Transistor") betrieben werden, und bei Anwendungen mit langen Phasenanschlussleitungen zwischen dem Umrichter und dem Motor können hohe Überspannungen auftreten, welche Schäden an dem Motor verursachen können.

Zur Verringerung von Überspannungen an dem Motor sind Vorrichtungen wie Filter oder (dU/dT)-Drosseln eingeführt worden, welche am Umrichter oder am Motor angeschlossen sind.

(dU/dT)-Drossein sind typischerweise am Umrichterausgang angeschlossen. In derartigen Drosseln werden durch hohe Schaltfrequenzen erzeugte Spannungsänderungsspitzen abgeflacht, so dass Überspannungen reduziert, aber nicht vollständig vermieden werden. Zudem benötigen derartige Drosseln viel Platz und sind teuer.

Als Filter eingesetzte RC-Schaltkreise oder RLC-Schaltkreise sind typischerweise an den Phasenanschlüssen des Motors angeschlossen. Durch diese können zwar Überspannungen besser als bei den vorstehend beschriebenen (dU/dt)-Drosseln verringert werden, aber es werden Verluste in den Schaltkreisen erzeugt, und die Schaltkreise benötigen Platz am Motoreingang, was oftmals unerwünscht ist.

### Darstellung der Erfindung

Aufgabe der Erfindung ist, ein Umrichtersystem anzugeben, bei dem Mittel vorgesehen sind, um in einer Phasenanschlussleitung von einem Umrichter erzeugte Überspannungen zu reduzieren.

Diese Aufgabe wird erfindungsgemäss durch die Merkmale der unabhängigen Patentansprüche gelöst.

Das erfindungsgemässe Umrichtersystem weist einen Umrichter und eine Phasenanschlussleitung mit Phasenanschlüssen auf, welche mit dem Umrichter elektrisch verbunden ist. Die Phasenanschlüsse sind an der Phasenanschlussleitung an dem Ende, welches von dem Umrichter abgewandt ist, angeordnet. Bei den Phasenanschlüssen ist eine Hilfsleitung, deren Wellenimpedanz im wesentlichen der Wellenimpedanz der Phasenanschlussleitung entspricht, angeschlossen. Von dem Umrichter breiten sich über die Phasenanschlussleitung Spannungswellen aus, welche sich am Ende der Phasenanschlussleitung über die Hilfsleitungen weiter fortpflanzen. Durch die erfindungsgemässe Hilfsleitung, welche eine Wellenimpedanz aufweist, die im wesentlichen der Wellenimpedanz der Phasenanschlussleitung entspricht, werden Reflexionen an dem Übergang zwischen beiden Leitungen reduziert oder im Falle einer vollständigen Übereinstimmung der Wellenimpedanzen beider Leitungen vermieden, und somit werden die unerwünschten Reflexionen der Spannungswellen auf der Phasenanschlussleitung weitestgehend vermieden oder zumindest verringert.

Im Falle einer angeschlossenen Last kann die Wellenimpedanz der Hilfsleitung derart ausgelegt werden, dass der Kehrwert der Wellenimpedanz der Phasenanschlussleitung im wesentlichen der Summe des Kehrwertes der Wellenimpedanz der Hilfsleitung und des Kehrwertes der Lasteingangsimpedanz entspricht. Je genauer die Wellenimpedanz gemäss dieser Regel gewählt wird, desto geringer sind die Reflexionen der Spannungswellen auf der Phasenanschlussleitung.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit den Zeichnungen offensichtlich.

### Kurze Beschreibung der Zeichnungen

Es zeigen:
- FIG 1: Umrichtersystem mit dU/dt-Drossel gemäss dem Stand der Technik;
- FIG 2: Umrichtersystem mit RC-Schaltkreis gemäss dem Stand der Technik;
- FIG 3: eine erste Ausführungsform eines Umrichtersystems mit erfindungsgemässer Hilfsleitung;
- FIG 4: eine zweite Ausführungsform eines Umrichtersystems mit erfindungsgemässer Hilfsleitung;
- FIG 5: eine dritte Ausführungsform eines Umrichtersystems mit erfindungsgemässer Hilfsleitung;
- FIG 6: eine vierte Ausführungsform eines Umrichtersystems mit erfindungsgemässer Hilfsleitung;
- FIG 7: eine fünfte Ausführungsform eines Umrichtersystems mit erfindungsgemässer Hilfsleitung; und
- FIG 8: eine sechste Ausführungsform eines Umrichtersystems mit erfindungsgemässer Hilfsleitung.

Die in den Zeichnungen verwendeten Bezugszeichen sind in der Bezugszeichenliste zusammengefasst aufgelistet. Grundsätzlich sind in den Zeichnungen gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

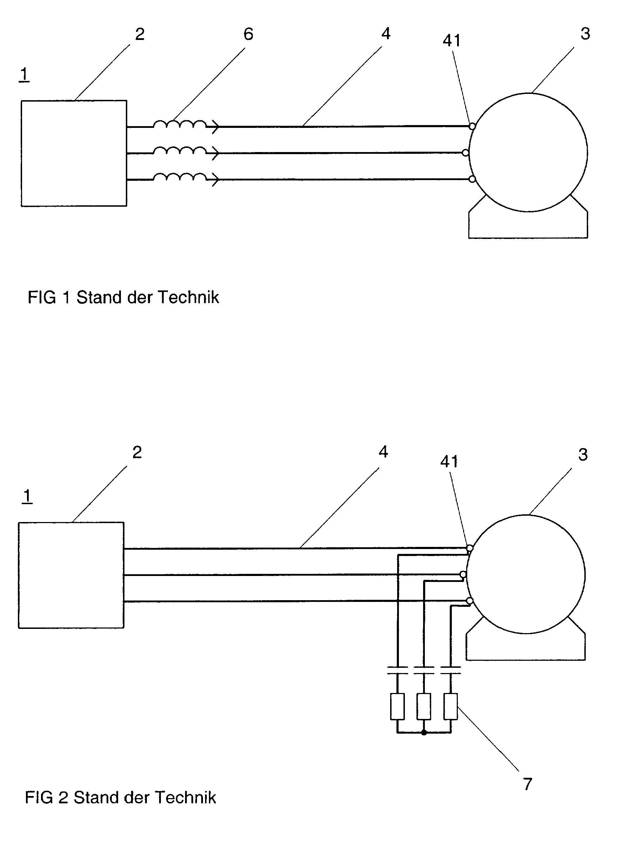

In FIG 1 ist ein Umrichtersystem 1 aus dem Stand der Technik, umfassend einen Umrichter 2 und eine Phasenanschlussleitung 4 mit Phasenanschlüssen 41 an dem von dem Umrichter 2 abgewandten Ende, dargestellt. An die Phasenanschlüsse 41 ist eine Last 3, beispielsweise ein Motor angeschlossen. Eine Drossel 6 ist bei dem Umrichter 2 an der Phasenanschlussleitung 4 seriell angeschlossen, wobei die Impedanz der Drossel abhängig von den typischen Strömen und Spannungsanstiegen in der Phasenanschlussleitung 41 gewählt wird.

FIG 2 ist ein weiteres Umrichtersystem 1 aus dem Stand der Technik, bei dem die Phasenanschlussleitung 4 an dem von dem Umrichter abgewandten Ende Phasenanschlüsse 41 aufweist, an welchen ein RC-Schaltkreis 7 als Filter elektrisch parallel angeschlossen ist. Die Impedanz des RC-Schaltkreises 7 entspricht der Wellenimpedanz der Phasenanschlussleitung 4, wobei die Impedanzen in dem für die Anwendung typischen Frequenzbereich angeglichen werden.

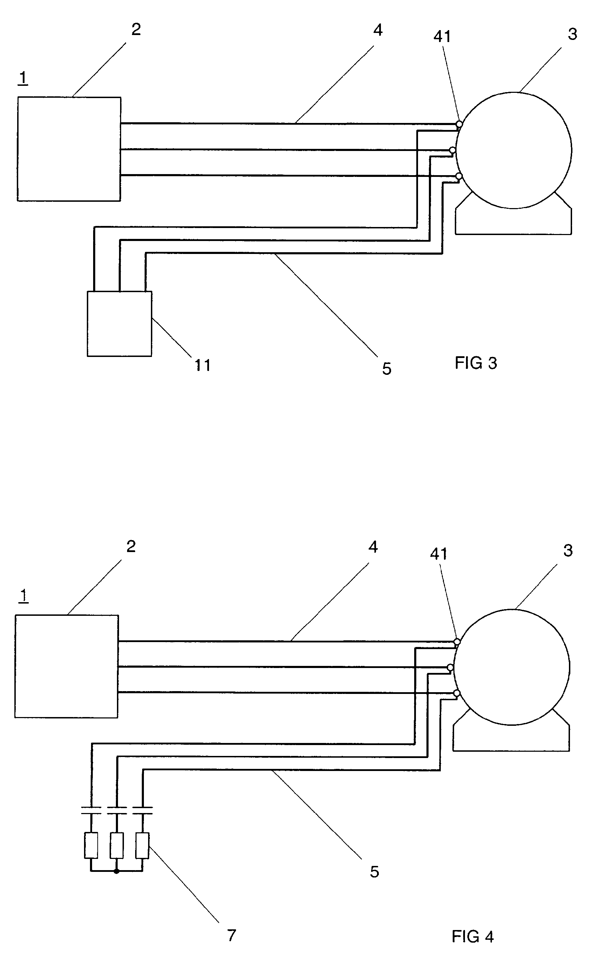

In den Ausführungsformen gemäss der Figuren 3 bis 8 weist die Phasenanschlussleitung 4 jeweils drei Phasenanschlüsse auf, es sind aber auch Anordnungen mit weniger oder mehr Phasenanschlüssen 41 vorstellbar. Es ist auch denkbar, statt der Phasenanschlussleitung 4 den erfindungsgemässen Gegenstand auf weitere, in einem Umrichtersystem angeordnete Leitungen wie Neutralleitungen, Schutzerden, oder Abschirmungen anzuwenden.

FIG 3 zeigt eine erste Ausführungsform eines erfindungsgemässen Umrichtersystems 1, bei welchem ein Umrichter 2 mit einer Last 3 über eine Phasenanschlussleitung 4, welche an dem vom Umrichter 2 abgewandten Ende der Phasenanschlussleitung 4 Phasenanschlüsse 41 aufweist, elektrisch verbunden ist. An die Phasenanschlüsse 41 ist eine Hilfsleitung 5, deren Wellenimpedanz im wesentlichen der Wellenimpedanz der Phasenanschlussleitung 4 entspricht, elektrisch parallel angeschlossen, wobei die Hilfsleitung mit einem Abschlusselement 11 abgeschlossen ist. Bei Aussendung einer Spannungswelle vom Umrichter 2 breitet sich die Welle über die Phasenanschlussleitung 4 aus und pflanzt sich an den Phasenanschlüssen 41 in der Hilfsleitung 5 fort. Je genauer die Wellenimpedanzen beider Leitungen 4, 5 übereinstimmen, desto geringere Überspannungen treten in der Phasenanschlussleitung 4 auf. Vorteil dieser Ausführungsform ist, dass die auf diese Weise vorgenommene Anpassung der Wellenimpedanz der Hilfsleitung einfach ist.

Bei einem Umrichtersystem aus dem Stand der Technik ohne ein Mittel zur Reduzierung von Überspannungen treten Spannungsspitzen von etwa bis zu 200 % auf (1200 V Spannungsspitzen bei einer Spannung von 600 V). Bei kurz aufeinander folgenden Pulsen können sich deren Spannungsspitzen sogar addieren. In einem erfindungsgemässen Umrichtersystem treten bei einer Übereinstimmung der Wellenimpedanzen der Phasenanschlussleitung 4 und der Hilfsleitung 5 in einem Bereich von 25 % bis 400 % Spannungsspitzen von etwa bis zu 166 % auf (1000 V Spannungsspitzen bei einer Spannung von 600 V). Bevorzugt ist eine Übereinstimmung der Wellenimpedanzen beider Leitungen 4, 5 in einem Bereich von 50 bis 200 %, so dass Spannungsspitzen etwa bis zu 133 % auftreten (800 V Spannungsspitzen bei einer Spannung von 600 V). Bei einer besonders bevorzugten genauen Übereinstimmung der Wellenimpedanzen beider Leitungen 4, 5 betragen die Spannungsspitzen weniger als etwa 110 % (650 V Spannungsspitzen bei einer Spannung von 600 V).

Alternativ kann bei der in FIG 3 gezeigten Ausführungsform die Wellenimpedanz der Hilfsleitung 5 derart gewählt werden, dass der Kehrwert der Wellenimpedanz der Phasenanschlussleitung 4 im wesentlichen der Summe des Kehrwertes der Wellenimpedanz der Hilfsleitung 5 und des Kehrwertes der Lasteingangsimpedanz entspricht. Diese Gleichung lässt sich nach der Wellenimpedanz der Hilfsleitung 5 auflösen, so dass diese im wesentlichen dem Produkt aus der Lasteingangsimpedanz und der Wellenimpedanz der Phasenanschlussleitung 4 dividiert durch die Differenz der Lasteingangimpedanz und der Wellenimpedanz der Phasenanschlussleitung 4 entspricht. Die Übereinstimmung sollte in einem Bereich von 25 % bis 400 % dieses Quotienten, bevorzugt in einem Bereich von 50 % bis 200 % liegen, wobei eine genaue Übereinstimmung besonders bevorzugt ist.

In der in FIG 3 gezeigten Ausführungsform weist das Abschlusselement 11 eine Wellenimpedanz auf, welche im wesentlichen der Wellenimpedanz der Hilfsleitung 5 entspricht. Dadurch werden Reflexionen in der Hilfsleitung weitestgehend vermieden oder zumindest verringert.

Die Wellenimpedanz der Phasenanschlussleitung 4 hängt vom Aufbau der Leitung sowie von den Schaltfrequenzen im Umrichter und dadurch erzeugten Spannungsänderungen ab. Daher sollte die Bestimmung der Wellenimpedanz der Hilfsleitung 5 in dem für die Schaltvorgänge typischen Frequenzbereich erfolgen. Bei Schaltzeiten von beispielsweise 100 ns ergibt sich ein Frequenzbereich von etwa 10 kHz bis 100 MHz. Die Schaltzeiten können je nach Schaltertyp und Ansteuerung stark variieren. Die Obergrenze des relevanten Frequenzbereichs verschiebt sich entsprechend. Typische Betriebsspannungen liegen in einem Bereich von bei etwa 200 V bis 15 kV.

FIG 4 zeigt eine zweite Ausführungsform des erfindungsgemässen Gegenstands mit einem RC-Schaltkreis 7 als Abschlusselement der Hilfsleitung 5. Die Wellenimpedanz der Hilfsleitung 5 entspricht im wesentlichen der Impedanz R des ohmschen Widerstands. Bei einem RC-Schaltkreis 7 werden niedrige Verluste erzeugt, wenn die Impedanz des RC-Schaltkreises für Frequenzen unterhalb der für die Schaltvorgänge typischen Frequenzbereich höhere Werte als die Hilfsleitung 5 aufweist. Dies kann durch eine kleine Kapazität C erreicht werden, wobei die Zeitkonstante RC vorteilhafterweise gross im Vergleich zur Signallaufzeit in der Hilfsleitung ist. Alternativ zu dem in FIG 4 gezeigten RC-Schaltkreis 7 kann auch ein RLC-Schaltkreis angeschlossen sein (der Übersichtlichkeit halber nicht dargestellt). Im Falle eines angeschlossenen RLC-Schaltkreises werden ein Widerstand und eine Spule elektrisch parallel und in Serie zu diesen ein Kondensator geschaltet. Der erfindungsgemässe RC-Schaltkreis 7 oder RLC-Schaltkreis kann auch als ein Sternschaltkreis oder als Dreiecksschaltkreis geschaltet sein. Im Falle eines angeschlossenen Neutralleiters kann dieser in den Abschluss einbezogen sein.

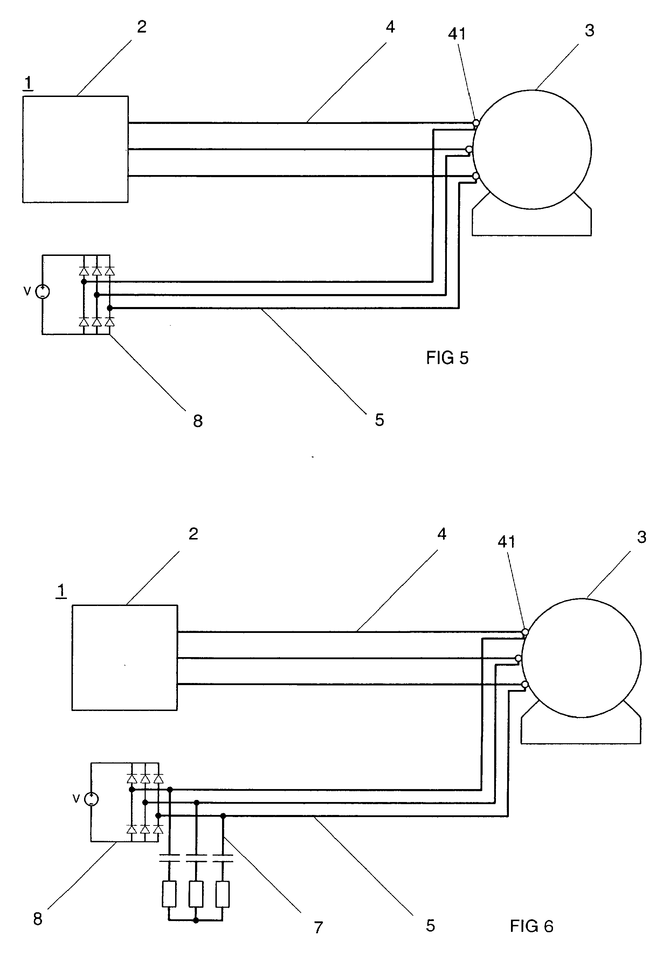

In FIG 5 ist eine dritte Ausführungsform des erfindungsgemässen Gegenstands dargestellt. An die Hilfsleitung 5 ist als Abschlusselement ein Diodengleichrichter 8 angeschlossen. Der Diodengleichrichter 8 kann in dem Umrichter 2 angeordnet sein, so dass kein zusätzlicher Platz ausserhalb des Umrichters 2 benötigt wird, und die im Diodengleichrichter 8 anfallende Energie kann dem Umrichter 2 zurückgeführt werden, beispielsweise, indem der Diodengleichrichter 8 direkt auf den Gleichspannungszwischenkreis des Umrichters 2 geschaltet wird. Alternativ zu der in FIG 5 dargestellten Ausführungsform kann statt des Diodengleichrichters auch ein Thyristor-Gleichrichter oder ein Varistor angeschlossen sein.

In FIG 6 ist eine vierte Ausführungsform des erfindungsgemässen Gegenstands dargestellt. An die Hilfsleitung 5 ist als Abschlusselement ein Diodengleichrichter 8 oder ein Thyristor-Gleichrichter angeschlossen, welcher elektrisch parallel zu einem RC-Schaltkreis 7 geschaltet ist. Die Wellenimpedanz der Hilfsleitung 5 entspricht im wesentlichen der Impedanz R des RC-Schaltkreises 7. Bei einem RC-Schaltkreis 7 werden niedrige Verluste erzeugt, wenn die Impedanz des RC-Schaltkreises für Frequenzen unterhalb der für die Schaltvorgänge typischen Frequenzbereich höhere Werte als die Hilfsleitung 5 aufweist. Dies kann durch eine kleine Kapazität C erreicht werden, wobei die Zeitkonstante RC vorteilhafterweise gross im Vergleich zur Signallaufzeit in der Hilfsleitung ist. Alternativ zu dem in FIG 6 gezeigten RC-Schaltkreis 7 kann auch ein RLC-Schaltkreis angeschlossen sein (der Übersichtlichkeit halber nicht dargestellt). Im Falle eines angeschlossenen RLC-Schaltkreises werden ein Widerstand und eine Spule elektrisch parallel und in Serie zu diesen ein Kondensator geschaltet. Im Falle eines angeschlossenen RLC-Schaltkreises kann der Abgriff für den Diodengleichrichter direkt an der Hilfsleitung (Anschlusspunkt von L und R) oder am gemeinsamen Kontenpunkt von R, L und C erfolgen. Mit dem RC-Schaltkreis 7, bzw. dem RLC-Schaltkreis kann während einer Spannungsänderung eine Überspannung weitestgehend vermieden oder zumindest verringert werden und bei Erreichen der Betriebsspannung kann durch den Diodengleichrichter 8 oder den Thyristor-Gleichrichter die Spannung begrenzt werden und Energie zurückgeführt werden, indem der Diodengleichrichter 8 direkt auf den Gleichspannungszwischenkreis des Umrichters 2 geschaltet wird. Alternativ zu der in FIG 6 dargestellten Ausführungsform kann statt des Diodengleichrichters 8 ein Varistor angeschlossen sein.

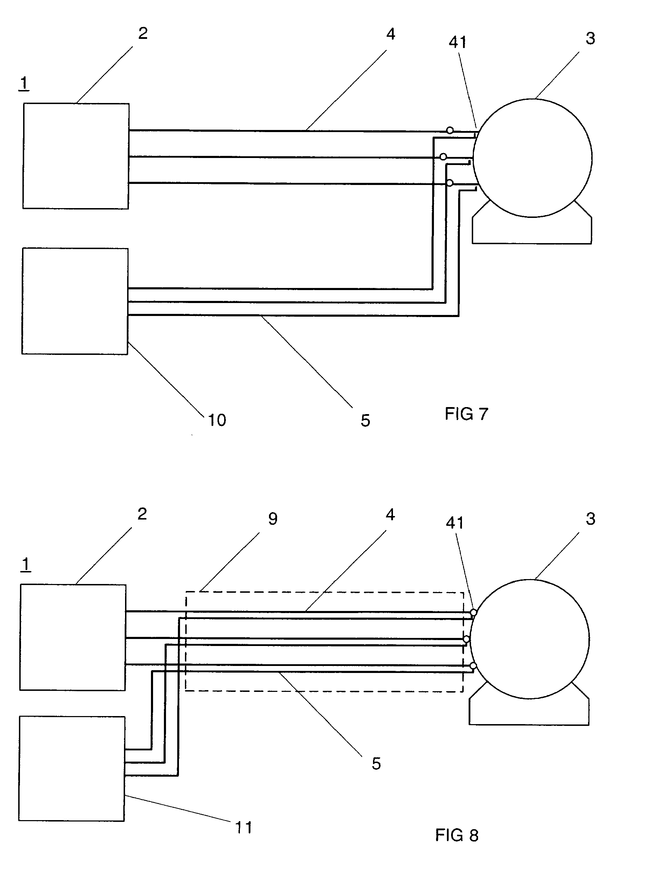

In FIG 7 ist eine fünfte Ausführungsform des erfindungsgemässen Gegenstands dargestellt. An die Hilfsleitung 5 ist als Abschlusselement ein Umrichter 10 angeschlossen, welcher derart betrieben wird, dass er eine der eintreffenden Spannungswelle entsprechende Spannung erzeugt, durch die eine Reflexion der eintreffenden Welle weitestgehend vermieden oder zumindest verringert wird. Die Umrichter 2 und 10 können derart betrieben werden, dass abwechselnd ein Umrichter 2, 10 eine Spannung erzeugt und der jeweils andere Umrichter 10, 2 als Abschlusselement verwendet wird und anschliessend der andere Umrichter 10, 2 eine Spannung erzeugt. Eine besonders gute Übereinstimmung der Wellenimpedanzen der Leitungen 4, 5 kann bei Verwendung von baugleichen Leitungen 4, 5, welche vorteilhafterweise zudem dieselbe Länge aufweisen, erreicht werden.

In FIG 8 ist eine sechste Ausführungsform des erfindungsgemässen Gegenstands dargestellt. Die Hilfsleitung 5 ist an den Phasenanschlüssen 41 elektrisch parallel zu der Phasenanschlussleitung 4 angeschlossen und mit einem Abschlusselement 11 abgeschlossen. Die Phasenanschlussleitung 4 und die Hilfsleitung 5 verlaufen zumindest über einen Teil der Länge einer der beiden Leitungen 4, 5 zusammen in einem Kabel 9. Die Wellenimpedanzen der Hilfsleitung 5 und des Abschlusselementes 11, bzw. 7, 8, 10 oder einer Kombination von parallel geschalteten Abschlusselementen 7 und 8 können entsprechend den in den Figuren 3 bis 7 dargestellten Ausführungsformen gewählt werden. Die in FIG 8 gezeigte Ausführungsform hat den Vorteil, dass zwischen dem Umrichter 2 und der Last 3 nur ein Kabel 9 zu verlegen ist. Vorteilhafterweise ist das Abschlusselement 11 der Hilfsleitung 5 in dem Umrichter 2 angeordnet, so dass das Abschlusselement 11 keinen zusätzlichen Platz benötigt.

Alternativ zu den in den Figuren 3 bis 8 gezeigten Ausführungsformen kann die Hilfsleitung 5 auch an der Phasenanschlussleitung 4 in der Nähe der Phasenanschlüsse 41 über eine Abzweigungsdose angeschlossen sein. Dies ist vorteilhaft, wenn bei den Phasenanschlüssen 41 nur wenig Platz für den Anschluss der Hilfsleitung 5 zur Verfügung steht.

Die Hilfsleitung 5 mit einem Abschlusselement gemäss einer der in den Figuren 3 bis 8 dargestellten Ausführungsformen kann dazu benutzt werden, um die Spannung am Abschlusselement zu messen. Diese Spannung ist proportional zu der an der Last anliegenden Spannung und kann zur Verbesserung der Regelung der Last verwendet werden.

Es ist denkbar, das erfindungsgemässe Umrichtersystem gemäss einer der obigen Ausführungsformen mit einer (dU/dt)-Hilfsdrossel, welche bei dem Umrichter 2 an der Phasenanschlussleitung 4 seriell angeschlossen ist, zu kombinieren. Bei einer Änderung der Spannung lassen sich mit der (dU/dt)-Hilfsdrossel Spannungsänderungsspitzen abflachen.

### Bezugszeichenliste

- 1: Umrichtersystem
- 2: Umrichter
- 3: Last
- 4: Phasenanschlussleitung
- 41: Phasenanschluss
- 5: Hilfsleitung
- 6: Drossel
- 7: RC-Schaltkreis
- 8: Diodengleichrichter
- 9: Kabel
- 10: Umrichter
- 11: Abschlusselement

## Patentansprüche

1. Umrichtersystem (1), umfassend einen Umrichter (2) und eine Phasenanschlussleitung (4), welche mit dem Umrichter (2) verbunden ist und Phasenanschlüsse (41) zum Anschluss einer elektrischen Last (3) aufweist, **dadurch gekennzeichnet, dass**
an die Phasenanschlüsse (41) eine Hilfsleitung (5) angeschlossen ist und die Wellenimpedanz der Hilfsleitung (5) im wesentlichen der Wellenimpedanz der Phasenanschlussleitung (4) entspricht.

2. Umrichtersystem (1), umfassend einen Umrichter (2) und eine Phasenanschlussleitung (4), welche mit dem Umrichter (2) verbunden ist und Phasenanschlüsse (41) zum Anschluss einer elektrischen Last (3) aufweist, **dadurch gekennzeichnet, dass**
an die Phasenanschlüsse (41) eine Hilfsleitung (5) angeschlossen ist und dass im Falle einer angeschlossenen Last (3) der Kehrwert der Wellenimpedanz der Phasenanschlussleitung (4) im wesentlichen der Summe des Kehrwertes der Wellenimpedanz der Hilfsleitung (5) und des Kehrwertes der Lasteingangsimpedanz entspricht.

3. Umrichtersystem (1) nach einem der Ansprüche 1 oder 2, **dadurch gekennzeichnet, dass**
die Hilfsleitung mit einem RC-Schaltkreis (7) oder einem RLC-Schaltkreis abgeschlossen ist, wobei die Impedanz R des RC-Schaltkreises (7) oder des RLC-Schaltkreises im wesentlichen der Wellenimpedanz der Hilfsleitung (5) entspricht.

4. Umrichtersystem (1) nach einem der Ansprüche 1 oder 2, **dadurch gekennzeichnet, dass**
die Hilfsleitung (5) mit einem Diodengleichrichter (8) oder Thyristor-Gleichrichter abgeschlossen ist.

5. Umrichtersystem (1) nach einem der Ansprüche 1 oder 2, **dadurch gekennzeichnet, dass**
die Hilfsleitung (5) mit einem Diodengleichrichter (8) und einem RC-Schaltkreis (7) oder einem RLC-Schaltkreis abgeschlossen ist, welche elektrisch verbunden sind, wobei die Wellenimpedanz der Hilfsleitung (5) im wesentlichen der Impedanz R des RC-Schaltkreises (7) oder des RLC-Schaltkreises entspricht.

6. Umrichtersystem (1) nach einem der Ansprüche 1 oder 2, **dadurch gekennzeichnet, dass**
die Hilfsleitung (5) mit einem Thyristor-Gleichrichter und einem RC-Schaltkreis (7) oder einem RLC-Schaltkreis abgeschlossen ist, welche elektrisch verbunden sind, wobei die Wellenimpedanz der Hilfsleitung (5) im wesentlichen der Impedanz R des RC-Schaltkreises (7) oder des RLC-Schaltkreises entspricht.

7. Umrichtersystem (1) nach einem der Ansprüche 1 oder 2, **dadurch gekennzeichnet, dass**
die Hilfsleitung (5) mit einem Umrichter (10) abgeschlossen ist.

8. Umrichtersystem (1) nach einem der vorangegangenen Ansprüche, **dadurch gekennzeichnet, dass**
die Phasenanschlussleitung (4) und die Hilfsleitung (5) zumindest über einen Teil der Länge einer der beiden Leitungen (4, 5) in einem Kabel (9) angeordnet sind.
